# EUROPÄISCHE PATENTSCHRIFT

(11) **EP 2 860 481 B1**
(45) Veröffentlichungstag und Bekanntmachung des Hinweises auf die Patenterteilung: **10.10.2018**
(21) Anmeldenummer: 14180522.6
(22) Anmeldetag: 11.08.2014
(51) Int. Cl.: F27B 3/04, C22B 7/00, C22B 21/00

(54) **Schmelzofen für Aluminiumschrott**
Melting furnace for aluminium scrap
Four de fusion pour débris d'aluminium

(30) Priorität: 08.10.2013 AT 506482013
(43) Veröffentlichungstag der Anmeldung: 15.04.2015
(73) Patentinhaber: Hertwich Engineering GmbH, 5280 Braunau (AT)
(72) Erfinder: Graggaber, Josef, 5280 Braunau (AT); Wimroither, Günther, 5282 Braunau (AT)
(74) Vertreter: Patentanwaltskanzlei Hübscher

(56) Entgegenhaltungen:
- WO-A1-83/02958

## Beschreibung

Die Erfindung bezieht sich auf einen Schmelzofen für Aluminiumschrott mit einer beheizten Hauptkammer und mit einer Abschmelzkammer, die über einen mit einer Pumpe versehenen Zulauf und einen Rücklauf in Strömungsverbindung mit der Hauptkammer steht und auf einer Seite eine von Zu- und Rücklauf beabstandete Schrottaufgabe für den Aluminiumschrott aufweist.

Zum Aufschmelzen von Aluminiumschrott sind Zweikammerschmelzöfen bekannt, die eine beheizte Hauptkammer und eine von der Hauptkammer durch eine Zwischenwand getrennte Abschmelzkammer aufweisen. Die Abschmelzkammer ist über einen Zulauf und einen Rücklauf mit der Hauptkammer strömungsverbunden. Zur Kreislaufführung der Aluminiumschmelze zwischen den beiden Kammern weist der Zulauf eine Pumpe für die Aluminiumschmelze, beispielsweise eine Induktionspumpe, auf. In der Abschmelzkammer ist auf der der Zwischenwand gegenüberliegenden Seite eine üblicherweise mit einer Schmelzrampe versehene Schrottaufgabe für den Aluminiumschrott vorgesehen. Nachteilig ist, dass sich in der Abschmelzkammer insbesondere im Bereich der Schrottaufgabe Strömungstoträume ausbilden, die den Abschmelzvorgang verlangsamen.

Um das Abschmelzen von leichtgewichtigem Metallschrott zu verbessern, der einer Metallschmelze in einem Kessel aufgegeben wird, wurde vorgeschlagen (US 6036745 A, DE 3111544 A1), in dem Kessel einen Wirbel oder Strudel zu erzeugen, dessen Symmetrie auf eine solche Weise gestört wird, dass das Einführen bzw. Eintauchen von leichtem Metallschrott in die Schmelze verbessert wird. Abgesehen davon, dass mangels einer Schrottaufgabe für festen Aluminiumschrott in einem solchen Kessel kein größeres Volumen festen Aluminiumschrottes geschmolzen werden kann, wird durch die bewusste Störung der Schmelzeströmung die Bildung von Toträumen in der Schmelze begünstigt. Der Erfindung liegt somit die Aufgabe zugrunde, einen Schmelzofen der eingangs geschilderten Art so auszugestalten, dass ein rasches und gleichmäßiges Abschmelzen des Aluminiumschrottes ermöglicht wird.

Die Erfindung löst die gestellte Aufgabe dadurch, dass die Schrottaufgabe auf der Schmalseite der einen langgestreckten Grundriss aufweisenden Abschmelzkammer vorgesehen ist, die im Bereich der der Schrottaufgabe gegenüberliegenden Schmalseite eine über den Zulauf anströmbare und in eine Längswand übergehende Umlenkfläche für eine horizontale Umwälzströmung der Schmelze zwischen dem Zulauf und dem auf der der Längswand mit der Umlenkfläche gegenüberliegenden Längswand angeordneten, in Richtung der Umwälzströmung verlaufenden Rücklauf bildet.

Zufolge der Anströmung der Umlenkfläche durch den über den Zulauf in die Abschmelzkammer gepumpten Schmelzestrom wird die Schmelze innerhalb der Abschmelzkammer in einer Umwälzströmung zwischen dem Zulauf und dem Rücklauf bewegt, wobei sich im Bereich der Schrottaufgabe ein zum noch nicht aufgeschmolzenen Aluminiumschrott tangentialer Schmelzestrom ergibt, und zwar weitgehend unabhängig vom jeweiligen Volumen des Aluminiumschrotts. Durch diese im Wesentlichen tangential verlaufende Schmelzeströmung wird das frisch aufgeschmolzene Aluminium aus dem Schrottbereich ausgefördert und über den in Richtung der Umwälzströmung verlaufenden Rücklauf entlang eines vergleichsweise kurzen Strömungswegs aus der Abschmelzkammer abgezogen und der Hauptkammer zugeführt. Im Übergangsbereich zwischen dem noch nicht aufgeschmolzenen Aluminiumschrott und der umgewälzten Aluminiumschmelze ergeben sich somit stets vorteilhafte Bedingungen für einen guten Wärmeübergang, sodass ein rasches Abschmelzen des Aluminiumschrottes gewährleistet wird. Darüber hinaus wird die Bildung von Strömungstoträumen in der Abschmelzkammer vermieden, weil die Umwälzströmung nicht nur zum Aluminiumschrott, sondern auch zu den Begrenzungswänden der Abschmelzkammer im Wesentlichen tangential verläuft. Sollte der Rücklauf verstopfen, kann für die Abschmelzkammer ein Überlauf als zusätzlicher Rücklauf zur Hauptkammer vorgesehen sein, der im Bereich der Schrottaufgabe angeordnet ist.

Besonders vorteilhafte Strömungsbedingungen ergeben sich, wenn der Zulauf tangential zur konkav gekrümmten Umlenkfläche verläuft. Hierdurch strömt die Schmelze vom Zulauf entlang der konkaven Umlenkfläche und der nachfolgenden Längswand bis zur Schrottaufgabe, in deren Bereich die Schmelzeströmung entlang des noch nicht aufgeschmolzenen Aluminiumschrotts umgelenkt und über den Rücklauf abfließt. Um den Rücklauf des abgeschmolzenen Aluminiums zur Hauptkammer zu verbessern, kann der Rücklauf in Strömungsrichtung abfallen, wodurch der Schmelzefluss durch den Rücklauf schwerkraftbedingt unterstützt wird. Um diesen Effekt zu verstärken, kann zusätzlich der Boden der Abschmelzkammer zum Rücklauf hin abfallen, beispielsweise in Form einer Rücklaufrinne.

Ist die Abschmelzkammer in an sich bekannter Weise mit einer Abschmelzrampe versehen, so kann der horizontalen Umwälzströmung eine zusätzliche vertikale Strömungskomponente hinzugefügt werden.

Zur Verhinderung eines Krätzebrandes kann zwischen Abschmelzkammer und Hauptkammer wenigstens eine weitere Schmelzkammer mit einem langgestreckten Grundriss angeordnet sein, die an ihrer einen Längsseite an den Rücklauf der Abschmelzkammer anschließt und mit der Hauptkammer strömungsverbunden ist. Da sich die bildende Krätze in dieser weiteren Schmelzkammer absetzen kann, gelangt sie nicht in die beheizte Hauptkammer, wodurch ein Krätzebrand vermieden wird. Die abgesetzte Krätze kann über eine gesonderte Ofentür aus der Schmelzkammer abgezogen werden.

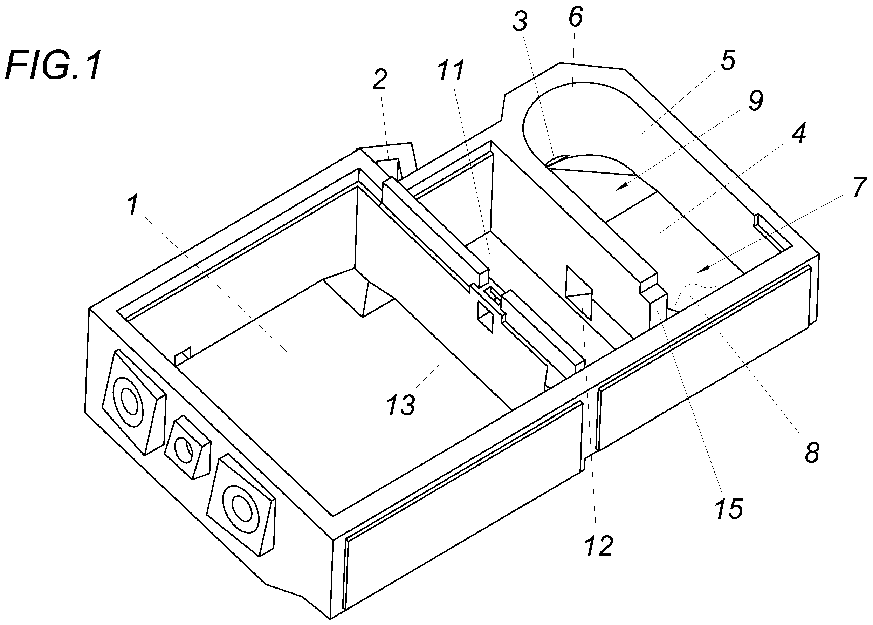

In der Zeichnung ist der Erfindungsgegenstand beispielsweise dargestellt. Es zeigen
Fig. 1 einen erfindungsgemäßen Schmelzofen in seinem grundsätzlichen Aufbau in einem Schaubild,

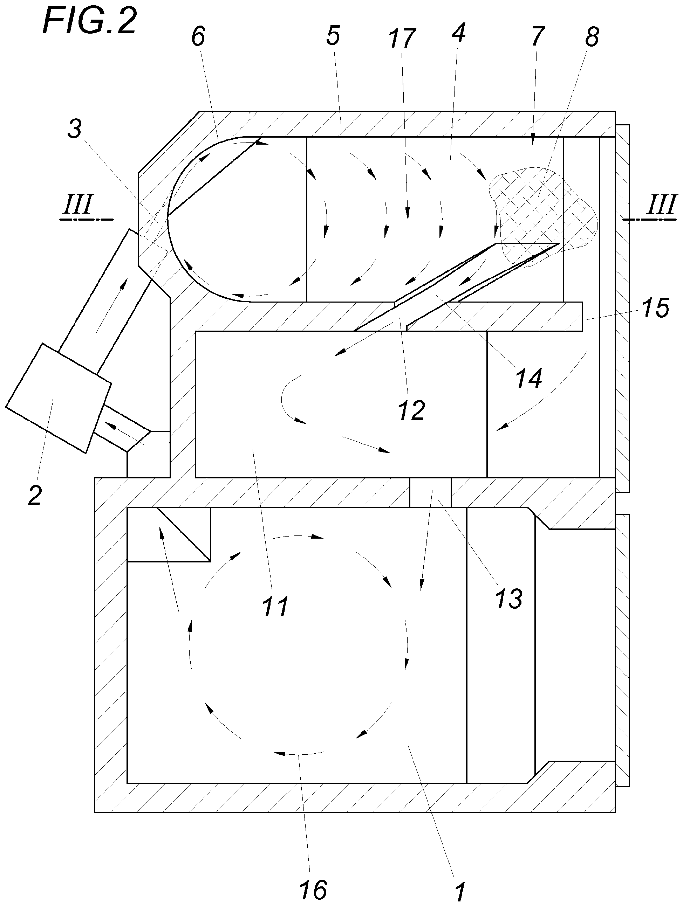

Fig. 2 diesen Schmelzofen in einem schematischen Horizontalschnitt und
Fig. 3 die Abschmelzkammer in einem Schnitt entlang der Linie II-II der Fig. 1.

Ein erfindungsgemäßer Schmelzofen weist eine beheizte Hauptkammer 1 auf, die über eine Induktionspumpe 2 und einen Zulauf 3 mit einer einen langgestreckten Grundriss aufweisenden Abschmelzkammer 4 strömungsverbunden ist. Der Zulauf 3 ist an einer Schmalseite der Abschmelzkammer 4 angeordnet, wobei die zulaufseitige Stirnwand eine konkav gekrümmte, in eine Längswand 5 der Abschmelzkammer 4 übergehende Umlenkfläche 6 bildet. Der Zulauf 3 mündet tangential zur Umlenkfläche 6 in die Abschmelzkammer 4.

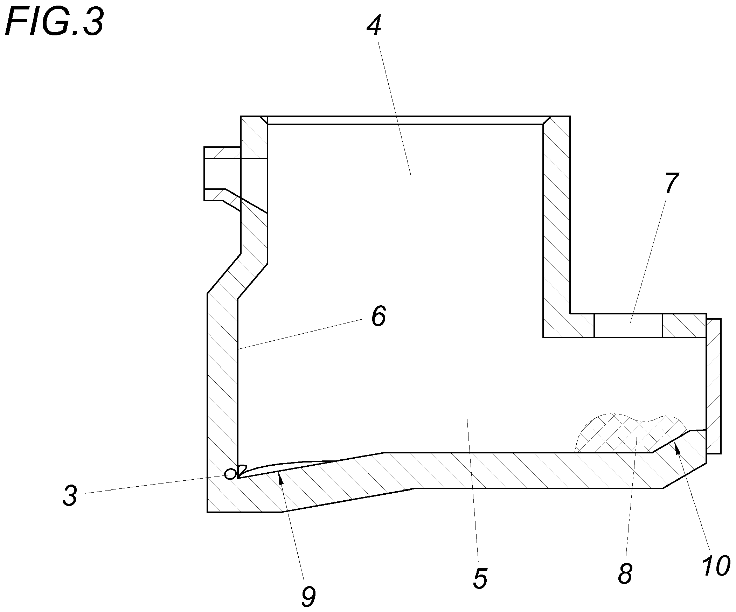

Auf der der Umlenkfläche 6 und dem Zulauf 3 gegenüberliegenden Schmalseite der Abschmelzkammer 4 ist eine Schrottaufgabe 7 für abzuschmelzenden Aluminiumschrott 8 vorgesehen. Wie insbesondere der Fig. 3 entnommen werden kann, steigt der Boden der Abschmelzkammer 4 vom Zulauf 3 zur Schrottaufgabe 7 hin an, und zwar über zwei Rampen 9 und 10.

Zwischen der Hauptkammer 1 und der Abschmelzkammer 4 ist eine ebenfalls einen langgestreckten Grundriss aufweisende weitere Schmelzkammer 11 zum Absetzen der sich beim Aufschmelzen des Aluminiumschrottes bildenden Krätze vorgesehen. Die Schmelzkammer 11 ist an ihrer an die Abschmelzkammer 4 angrenzenden Längsseite an den Rücklauf 12 der Abschmelzkammer 4 angeschlossen und mit der Hauptkammer 2 über eine Durchtrittsöffnung 13 strömungsverbunden. Der Boden der Abschmelzkammer 5 fällt in Richtung des Rücklaufs 12 zur Schmelzkammer 11 unter Ausbildung einer Rücklaufrinne 14 ab. Im Fall eines Verstopfens des Rücklaufs 12 ist zwischen der Abschmelzkammer 5 und der Schmelzkammer 11 im Bereich der Schrottaufgabe 7 ein Überlauf 15 vorgesehen.

Im Betrieb des Schmelzofens wird die in der Hauptkammer 1 erhitzte und dort beispielsweise über einen nicht dargestellten Induktionsrührer im Kreislauf 16 geführte Aluminiumschmelze abgezogen und über die Induktionspumpe 2 und den Zulauf 3 in die Abschmelzkammer 4 gepumpt, und zwar tangential zur Umlenkfläche 6. Die einströmende Aluminiumschmelze fliest entlang der Umlenkfläche 6 und entlang der nachfolgenden Längswand 5 bis zum Aluminiumschrott 8, der in Verbindung mit dem entsprechend der Strömungsrichtung ausgerichteten Rücklauf 12 für eine Umlenkung der Aluminiumschmelze mit einer ausgeprägten, tangential zum Aluminiumschrott 8 verlaufenden Strömungskomponente 17 sorgt. Diese Strömungskomponente 17 richtet sich nach dem jeweiligen Volumen des Aluminiumschrotts 8. Die zum Aluminiumschrott 8 tangentiale Strömungskomponente 17 der Aluminiumschmelze bedingt einen vorteilhaften Wärmeübergang zwischen der Aluminiumschmelze und dem Aluminiumschrott 8, wobei die frisch abgeschmolzene Aluminiumschmelze mit der Umwälzströmung über die Rücklaufrinne 14 und den Rücklauf 13 aus der Abschmelzkammer 4 in die Schmelzkammer 11 abgeführt wird. In der der Schmelzkammer 11 setzt sich die gebildete Krätze ab, sodass nur krätzefreie Schmelze über die Durchtrittsöffnung 13 in die beheizte Hauptkammer 1 gelangt, wodurch die Gefahr eines Krätzebrandes vermieden wird.

## Patentansprüche

1. Schmelzofen für Aluminiumschrott (8) mit einer beheizten Hauptkammer (1) und mit einer Abschmelzkammer (4), die über einen mit einer Pumpe (2) versehenen Zulauf (3) und einen Rücklauf (12) in Strömungsverbindung mit der Hauptkammer (1) steht und auf einer Seite eine von Zu- und Rücklauf (3, 12) beabstandete Schrottaufgabe (7) aufweist, **dadurch gekennzeichnet, dass** die Schrottaufgabe (7) auf der Schmalseite der einen langgestreckten Grundriss aufweisenden Abschmelzkammer (4) vorgesehen ist, die im Bereich der der Schrottaufgabe (7) gegenüberliegenden Schmalseite eine über den Zulauf (3) anströmbare und in eine Längswand (5) übergehende Umlenkfläche (6) für eine horizontale Umwälzströmung der Schmelze zwischen dem Zulauf (3) und dem auf der der Längswand (5) mit der Umlenkfläche (6) gegenüberliegenden Längswand angeordneten, in Richtung der Umwälzströmung verlaufenden Rücklauf (12) bildet.

2. Schmelzofen nach Anspruch 1, **dadurch gekennzeichnet, dass** der Zulauf (3) tangential zur konkav gekrümmten Umlenkfläche (6) verläuft.

3. Schmelzofen nach Anspruch 1 oder 2, **dadurch gekennzeichnet, dass** der Rücklauf (12) in Strömungsrichtung abfällt.

4. Schmelzofen nach einem der Ansprüche 1 bis 3, **dadurch gekennzeichnet, dass** die Abschmelzkammer (4) eine Abschmelzrampe bildet.

5. Schmelzofen nach einem der Ansprüche 1 bis 4, **dadurch gekennzeichnet, dass** zwischen Abschmelzkammer (4) und Hauptkammer (1) wenigstens eine weitere Schmelzkammer (11) mit einem langgestreckten Grundriss angeordnet ist, die an ihrer einen Längsseite an den Rücklauf (12) der Abschmelzkammer (4) anschließt und mit der Hauptkammer (1) strömungsverbunden ist.

## Claims

1. Melting furnace for aluminium scrap (8) having a heated main chamber (1) and a melt chamber (4) which is in flow-communication with the main chamber (1) via an inlet (3) provided with a pump (2) and via a return (12), and which comprises on one side a scrap feed region (7) spaced apart from the inlet (3) and return (12), **characterised in that** the scrap feed region (7) is provided on the narrow side of the melt chamber (4) comprising an elongate contour, said chamber forming, in the region of the narrow side opposite the scrap feed region (7), a deflection surface (6) - against which a flow can arrive via the inlet (3) and which transitions into a longitudinal wall (5) - for a horizontal circulation flow of the melt between the inlet (3) and the return (12) arranged on the longitudinal wall opposite the longitudinal wall (5) with the deflection surface (6) and extending in the direction of the circulation flow.

2. Melting furnace as claimed in claim 1, **characterised in that** the inlet (3) extends tangentially to the concave deflection surface (6).

3. Melting furnace as claimed in claim 1 or 2, **characterised in that** the return (12) descends in the flow direction.

4. Melting furnace as claimed in any one of claims 1 to 3, **characterised in that** the melt chamber (4) forms a melt ramp.

5. Melting furnace as claimed in any one of claims 1 to 4, **characterised in that** at least one further melting chamber (11) having an elongate contour is arranged between the melt chamber (4) and main chamber (1) and is connected at one of its long sides to the return (12) of the melt chamber (4) and is in flow-communication with the main chamber (1).

## Revendications

1. Four de fusion pour des déchets d'aluminium (8) avec une chambre principale (1) chauffée et avec une chambre de fusion (4) qui est en liaison fluidique avec la chambre principale (1) par l'intermédiaire d'une alimentation (3) prévue avec une pompe (2) et un retour (12), et comprend sur un côté une charge de déchets (7) espacée de l'alimentation (3) et du retour (3, 12), **caractérisé en ce que** la charge de déchets (7) est prévue sur le côté étroit de la chambre de fusion (4) comprenant un fond plat allongé qui forme au niveau du côté étroit opposé à la charge de déchets (7) une surface de déviation (6) passant au-dessus d'une paroi longitudinale (5) et pouvant s'écouler sur l'alimentation (3) pour un flux de circulation horizontal autour du métal en fusion entre l'alimentation (3) et le retour (12) étant en direction du flux de circulation, agencé sur la paroi longitudinale opposée à la paroi longitudinale (5) avec la surface de déviation (6).

2. Four de fusion selon la revendication 1, **caractérisé en ce que** l'alimentation (3) est tangentielle à la surface de déviation (6) courbée de manière concave.

3. Four de fusion selon la revendication 1 ou 2, **caractérisé en ce que** le retour (12) est incliné en baissant dans le sens du flux.

4. Four de fusion selon l'une des revendications 1 à 3, **caractérisé en ce que** la chambre de fusion (4) forme une rampe de fusion.

5. Four de fusion selon l'une des revendications 1 à 4, **caractérisé en ce qu'**entre la chambre de fusion (4) et la chambre principale (1), il est disposé au moins une autre chambre de fusion (11) avec un fond plat allongé, qui est raccordée au niveau d'un de ses cotés longitudinaux au niveau du retour (12) de la chambre de fusion (4) et est en liaison fluidique avec la chambre principale (1).
